# EUROPEAN PATENT SPECIFICATION

(11) **EP 0 571 629 B1**
(45) Date of publication and mention of the grant of the patent: **09.06.1999**
(21) Application number: 92914093.7
(22) Date of filing: 03.07.1992
(51) Int. Cl.: A63C 5/035, A63C 17/22, B60B 19/00

(54) **ELASTIC WHEELS AND SKI GEAR EMPLOYING THE SAME**
ELASTISCHE RÄDER SOWIE SKIFAHRZEUG MIT SOLCHEN RÄDERN
ROUES ELASTIQUES ET SKI A ROULETTES UTILISANT DE TELLES ROUES

(30) Priority: 17.12.1991 JP 33370191; 25.02.1992 JP 3790192
(43) Date of publication of application: 01.12.1993
(73) Proprietor: HOMMA SCIENCE CORPORATION, Tokamachi-shi, Niigata 948 (JP)
(72) Inventor: HOMMA, Akira, Tokamachi-shi Niigata 948 (JP); HOMMA, Susumu, Tokamachi-shi Niigata 948 (JP); SATO, Hiroshi, Tokamachi-shi Niigata 948 (JP); HIROI, Hisao, Tokamachi-shi Niigata 948 (JP)
(74) Representative: Müller-Boré & Partner Patentanwälte
(86) International application number: PCT/JP92/00845
(87) International publication number: WO 93/11836

(56) References cited:
- EP-A- 0 295 081
- FR-A- 381 972
- JP-A- 3 028 002
- JP-A- 63 057 302
- JP-U- 55 062 378
- JP-U- 63 074 170
- US-A- 4 153 094

## Description

The present invention relates to an elastic wheel and to a pair of roller skis provided with the elastic wheels.

Various kinds of sporting goods have been hitherto developed for an operator to slide down a slope without snow or slide on the ground without snow, using a technique similar to that of skiing. One of the typical ones is a so-called pair of roller skis each having wheels rotatably attached to the front of and at the back of a mount on which a ski boot is placed or to the bottom surface thereof, and the running function of the rotating wheels is utilized to provide the function of sliding down a slope or sliding on the ground similarly to the function of the ski.

If a skier slides down a slope wearing such roller skis and attempts to operate them with a technique similar to that of the original skis on snow, it is necessary to apply a strong force on the roller wheels in the direction perpendicular to the running direction of the wheels and, at the same time, make them shift (sideslip) in the direction perpendicular to the running direction. However, since the ordinary wheels are rotated about the wheel shaft, the running direction is limited to that perpendicular to the wheel shaft. The shifting of the wheels in the direction perpendicular to that of the running rotation thereof generally damages the running property of the wheels and causes significant damage to the tire parts.

For example, the EP-A-0 295 081, concerning an inline-roller-skate having wheels made of an relatively elastic urethane material, describes the problem to make the wheels more rigid to avoid a damage of wheel-parts, especially of the bearings.

This led to the development of a wheel having a tire part made of an elastic material such as a rubber material and provided at the ends of the outer periphery thereof with edges (for example, refer to JP-B-61-59745). This means that the wheel is devised to positively cause a sideslip to easily allow a turning motion and, at the same time, to cause the edges to produce a braking operation to make the turning motion sharper.

However, since the sideslipping motion utilizing such a normal elastic deformation of the tire part can provide neither a sufficient turning ability nor a rapid braking and stopping motion, use of the above described wheels for skis is difficult.

Further, another pair of roller skis has been developed in which, in order to facilitate a turning motion of the roller skis during the running thereof, each entire roller wheel is elastically supported so that application of a load causes the wheel shaft of the roller wheel to be inclined (for example, refer to JP-B-52-24901 and JP-B-53-22494).

However, such an inclination of the wheel shaft of the roller shaft during the running thereof provides an extraordinarily unstable running motion which causes the rider easily to fall down. Particularly, use of the pair of roller skis as a pair of skis is dangerous for a rider who slides down a slope at a high speed.

It is object of the present invention to provide a roller wheel for a roller ski and a pair of roller skis comprising such roller wheels which enable a running ability similar to a pair of normal skis with a technique similar to operating a pair of normal skis used on snow.

This object is achieved by an elastic wheel having the features disclosed in claim 1 and a pair of roller skis having the features disclosed in claim 11. Preferred embodiments are defined in the dependent subclaims.

The inventors of the present application learned that a pair of roller skis can be turned and stopped similarly to a pair of normal skis by causing the tire part of the roller wheel to produce a transversal shift in the direction perpendicular to the running direction of the wheel shaft. Hereupon, in order to achieve the object as described above, the inventors developed an elastic wheel which facilitates the shift of the wheel in the direction perpendicular to the running direction thereof and has superior turning and braking functions.

In the elastic wheel according to the invention the tire part is provided therein with a core disk having a plurality of disk pieces radially arranged.

In a preferable embodiment of the invention the tire part is constituted by arranging on and around the circular rim of the wheel a plurality of swinging members supported for swinging about a shaft extending in the same direction as the direction tangential to the circular rim part.

The elastic wheel according to the invention runs in the direction of rotation of the wheel shaft and, at the same time, when an external force acts on the wheel in the direction perpendicular to the running direction, the tire parts are continuously displaced in the direction perpendicular to the running direction corresponding to the magnitude of the external force and the wheel shifts (sideslips) in the direction perpendicular to the running direction. Therefore, utilization of such a shift enables the wheel to be suddenly stopped or acutely turned.

A pair of skis according to the invention is constituted by using the elastic wheels as described above and is characterized in that each of the skis comprises a boot-placing plate on which the boot of a skier is placed and fixed and rotating wheels rotatably attached to the boot-placing plate at the front and rear portions thereof, at least one of the rotating wheels consisting of an elastic wheel having a tire part elastically deformable in the direction perpendicular to the running direction of the wheel.

With this pair of skis, a straight running action, a sideslip, and a sudden stop or turning action are combined so that a skier can slide down a slope with a feeling similar to that of ordinary skis on snow, displaying a manipulating performance similar to that of such skis.
Fig. 1 is a perspective view showing the external appearance of one embodiment of the invention;
Fig. 2 is a perspective view showing the external appearance of an example of a core disk of the wheel shown in Fig. 1;
Fig. 3 is a sectional view of the same elastic wheel;
Fig. 4 is a sectional view showing the action of the wheel;
Fig. 5 is a sectional view showing the action of the same elastic wheel;
Fig. 6 is a sectional view showing the action of the same elastic wheel;
Fig. 7 is a sectional view showing the action of the same elastic wheel;
Fig. 8 is a sectional view showing the action of the same elastic wheel;
Fig. 9 (A), (B) and (C) are views for explaining the action of the elastic wheel, (A) being a view as seen from the front of the elastic wheel, (B) being a view as seen from the lateral side and (C) being a view as seen from the lower side of the surface of the wheel which is in contact with the ground;
Fig. 10 is a perspective view showing the external appearance of an embodiment of one of a pair of roller skis according to the invention;
Fig. 11 (A), (B) and (C) are perspective views showing the operation of the pair of roller skis;
Fig. 12 (A), (B), (C) and (C') are front views with the lower half sectioned, showing the operation of the elastic wheels of the pair of roller skis;
Fig. 13 is an explanatory top view showing the state wherein a skier moves straight in a "Pflug" position using the pair of roller skis according to the invention;
Fig. 14 is an explanatory top view showing the state wherein a skier performs a turn to the left in a "pflug" position using the pair of roller skis according to the invention; and
Fig. 15 is an explanatory top view showing the state wherein a skier performs a motion of sliding down obliquely using the pair of roller skis.

Now, embodiments of the invention will be described with reference to the drawings.

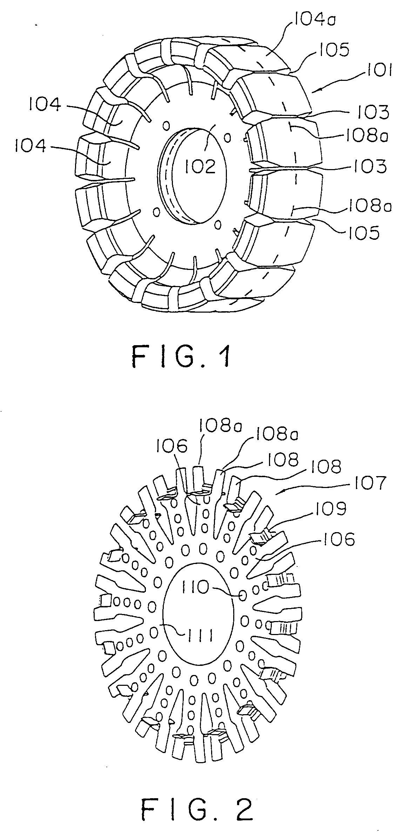

Fig. 1 is a perspective view showing the exterior appearance of a tire part 101 of the elastic wheel according to the present embodiment. The tire part 101 comprises a circular base end portion 102 and a plurality of elastic pieces 104 formed by providing slits 103 on the outer periphery of the base end portion 102 at equal pitch intervals, and each of the elastic pieces 104 is made planar at the top surface thereof and provided with the cut parts 105 at the ends of the peripheral edges.

In the present embodiment, a core disk 107 is further embedded in the tire part 101 and includes a plurality of disk pieces 106 radially arranged perpendicularly to the axis of the tire part 101.

As shown in Fig. 2 , the core disk 107 is produced by forming a ring-like sheet metal or synthetic resin sheet and has radially arranged elongated disk pieces of the same number as that of the elastic pieces of the tire part 101. Each of the disk pieces 106 has at the front end two branched members 108 and a receiving washer 109 is secured between the two members 108 perpendicularly to the disk pieces 106. Each of the disk pieces is provided with holes 110 to reduce the weight to a degree such that the strength thereof will not be decreased. Adjustment of the holes 110 in size and number permits adjustment of the elastic pieces 104 in the degree of the elastic deformation.

The core disk 107 is provided inwardly in the middle of the tire part 101 perpendicularly to the axis of the wheel, and the base end portion 111 of the core disk 107 extends to the inner peripheral edge of the base end portion 102 of the tire part 101. The end 108a of the core disk 107 extends to the same position as the position where the top surface 104a of the tire part 101 exists or to a position where it projects somewhat therefrom.

The base end portion 102 of the tire part 101 is mounted on the circular rim 112 as a wheel supporting means together with the base end portion 111 of the core disk 107, and the circular rim 112 is connected to a hub 114 for a wheel shaft through a disk-like connection 113.

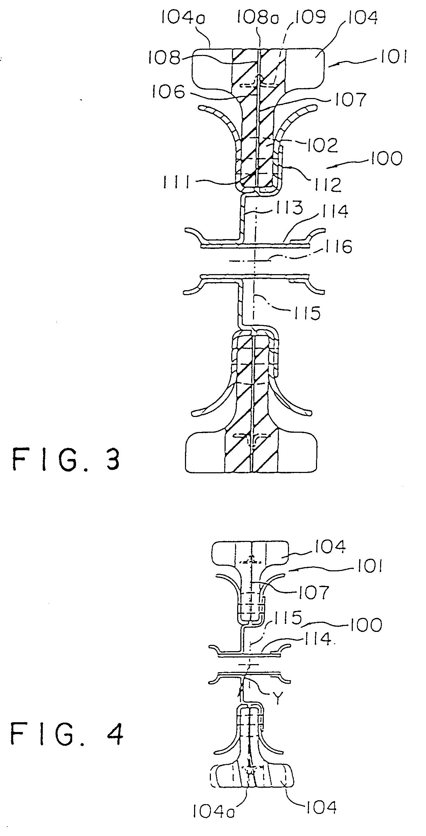

The operation of the present embodiment as constituted above will be described with reference to Figs. 4 to 8.

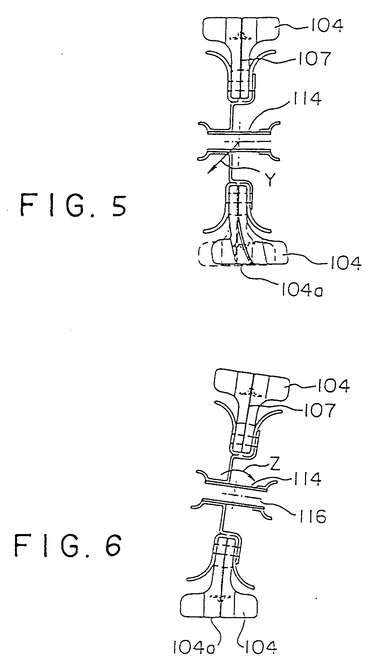

Application of a force Y to the elastic wheel 100 in the state shown in Fig. 3 in the direction intersecting with a surface of rotation 115 of the wheel causes the elastic piece 104 in contact with the ground to be elastically deformed, as shown in Fig. 4, so that the surface of rotation 115 of the wheel is displaced to the side opposite the direction of the applied force Y. Further application of a force larger than the force Y makes the degree of elastic deformation of the elastic piece 104 larger, as shown in Fig. 5, and causes the body of a skier wearing a pair of skis provided with the elastic wheel 100 to be displaced in the direction away from that of the force Y.

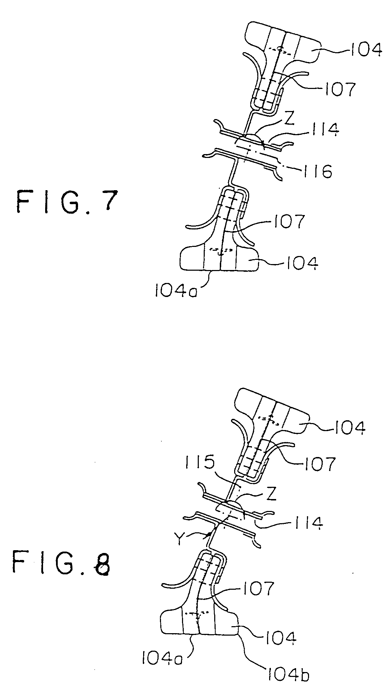

Subsequently, as shown in Figs. 6 and 7, application of a force Z in the direction allowing the axis of rotation 116 of the wheel to be tilted, causes the elastic wheel 104 to be elastically deformed, thereby tilting the elastic wheel 100. Application of a force Y intersecting with the surface of rotation 115 of the wheel in this state causes the elastic piece 104 to be deformed to the maximum, as shown in Fig. 8, and an edging motion to occur with a point indicated by reference 104b among the ground contacting portions of the elastic piece 104 as a center. Thus, the wheel 100 is turned to the right while sideslipping to the left with respect to the drawing, assuming that the wheel 100 is advanced in the direction perpendicular to the drawing.

In this way, when causing the elastic wheel 100 to perform a turning motion, the elastic members 104 and the core disk 107 are elastically deformed largely with the respective base end portions 102 and 111 as a base point. In this case, the present embodiment, in which the core disk 107 is embedded in the interior of the tire part 101, provides superior effects as described below.
(i) The strength against bending and torsion can be increased as compared with that of an elastic wheel integrally formed using a rubber member. Furthermore, the loading capacity is increased so that a buckling of the tire part can be prevented.
(ii) Since the elastically restoring force of the core disk can be utilized in addition to that of the elastic piece, the force which restores the wheel to its original state after the elastic deformation becomes greater.
(iii) If the ends 108a of the core disk 107 are slightly extended from the top surfaces 104a of the elastic pieces 104, the extended ends 108a will bite into the surface of the ground to thereby prevent the wheel from slipping.

Moreover, wear of the tire part 101 can be reduced.
(iv) The mounting of the receiving washer 109 forms the core in the direction of width of the elastic piece 104, which further increases the load resisting performance of the elastic piece 104.

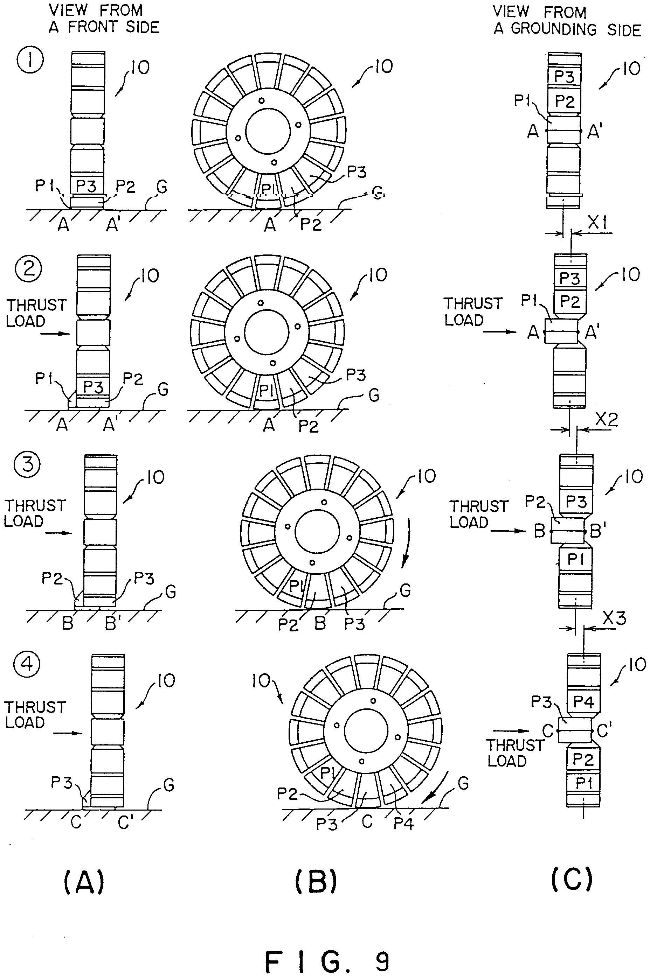

The operation of the elastic wheel 10 constituted as described above will be described with reference to Fig. 9.

Referring to Fig. 9, (A) shows a view of the elastic wheel 10 as seen from the front, (B) a view as seen from the lateral side, and (C) a view as seen from the lower side of the surface which is in contact with the ground. The elastic wheel 10 is assumed to act on the following preconditions to facilitate the description.
(i) The tire part is an elastic body. However the surface which is in contact with the ground is assumed to be a point contact (line contact).
(ii) The force regarding the transversal shift of the wheel is assumed to be only a thrust load acting on the wheel shaft.
(iii) The wheel is assumed to run from the surface of the drawing to the front in the view (A) as seen from the front, to run from the left to the right in the view (B) as seen from the lateral side and to run from the lower side to the upper side of the surface of the drawing in the view (C) as seen from the lower side of the surface which is in contact with the ground.

(1) shows the state immediately before the start of rotation. The elastic wheel 10 is in contact with the ground G along line A-A'. When a thrust load is applied to the wheel shaft in this state, it is transmitted to the tire part and a first elastic piece P1 is elastically deformed in the direction in which the thrust load is applied while being kept in the state where the first elastic piece is in contact with the ground G along line A-A', so that the elastic wheel 10 is shifted transversely by the amount (X1) of the elastic deformation (the state of (2)).

Then, rotation of the elastic wheel 10 from the state of (2) to the arrow-marked direction causes the ground contact line of the tire part to shift to line B-B' and a second elastic piece P2 to come in contact with the ground G. The second elastic piece P2 is subjected to a thrust load from the time it comes into contact with the ground, to thereby perform an elastic deformation so that the elastic wheel 10 is further shifted transversely (the state of (3)). On the other hand, the first elastic piece P1 released from the state where it is in contact with the ground is restored from the state of deformation to its original position.

Subsequently, further rotation of the elastic wheel 10 from the state of (3) causes the ground contact line of the tire part to shift to line C-C' and the second elastic piece P2 to come into contact with the ground G. A third elastic piece P3 is similarly subjected to a thrust load to be elastically deformed so that the elastic wheel 10 is further shifted transversely by the amount (X3) of the elastic deformation (the state of (4)).

In this way, while the elastic wheel 10 subjected to a thrust load is rolled from the position where the first elastic piece P1 is in contact with the ground to the position where the third elastic piece P3 comes into contact with the ground, the elastic wheel 10 is shifted transversely (the direction perpendicular to the running direction of the wheel 10) by the distance of $\text{X1 + X2 + X3}$, which is the sum of the amounts of the elastic deformations of the elastic pieces P1, P2, P3. Consequently, the elastic wheel 10 runs in rotation in the oblique and front direction with the wheel shaft being kept to run in the same direction.

The amount of transverse shifting of the elastic wheel 10 changes depending on an applied thrust load, that is, when a greater thrust load is applied, the elastic piece undergoes a greater elastic deformation to cause a greater amount of transverse shifting, and when a smaller thrust load is applied, a smaller amount of transverse shifting is caused conversely. Further, a change in the direction of the applied thrust load causes the direction of the transversal shift to be changed from side to side. Besides, control of the magnitude and direction of the applied thrust load enables the elastic wheel 10 to run freely in an arbitrary direction and at an arbitrary turning angle.

The present embodiment thus enables the tire part 16 to positively perform an elastic deformation utilizing a thrust load applied to the elastic wheel 10 and to thereby change arbitrarily the running direction of the wheel without using any particular steering gear or inclining the wheel shaft.

Utilization of the motion of the elastic wheel 10 enables implements provided with the elastic wheels 10, for example, a pair of roller skis to display a feeling of use similar to that of a pair of skis on snow and to provide superior turning and stopping motions.

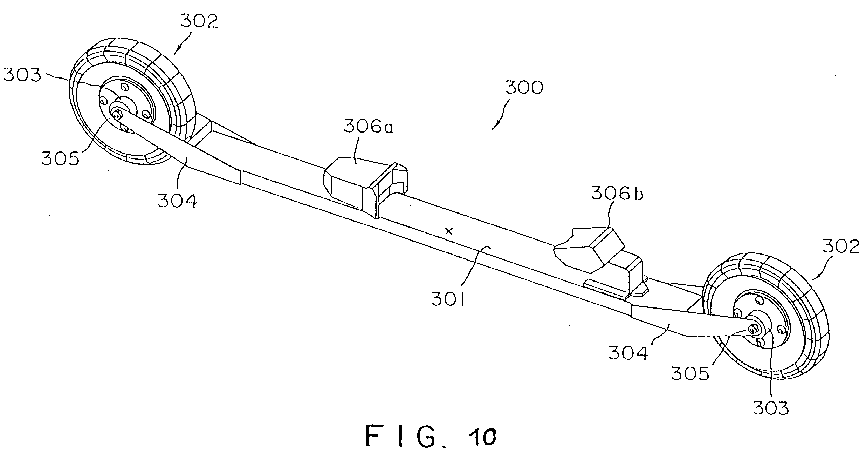

Fig. 10 shows an example of one of a pair of roller skis which was constituted by using the elastic wheel according to the invention. This roller ski 300 comprises a flat plate 301 for placing a boot thereon and rotating wheels rotatably attached to the front and rear ends of the boot-placing plate 301. In the present embodiment, any one of the elastic wheels 302 shown in the embodiments as described above are used.

Each of the elastic wheels 302 is supported at the bearing portions 303 thereof by wheel supporting means which comprise a pair of supporting frames 304 fixedly secured to the boot-placing plate 301 at the base end portions and an axle or wheel shaft 305 mounted on the other ends of the supporting frames 304.

Devices for fixing the boot, for example metal fittings 306a, 306b for a ski boot, are installed on the boot-placing plate 301. Preferably, the metal fittings 306a, 306b are located toward the rear (the rear wheel side), similarly as in the ordinary skis.

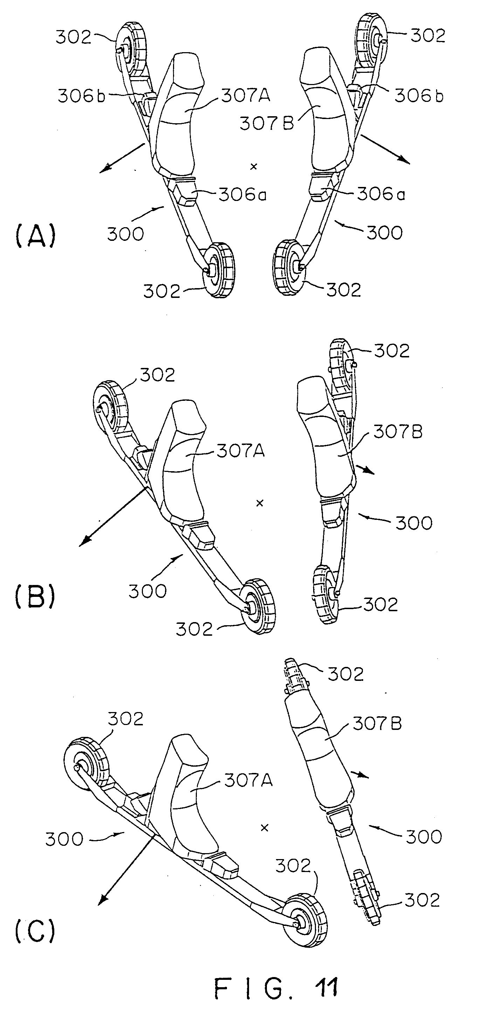

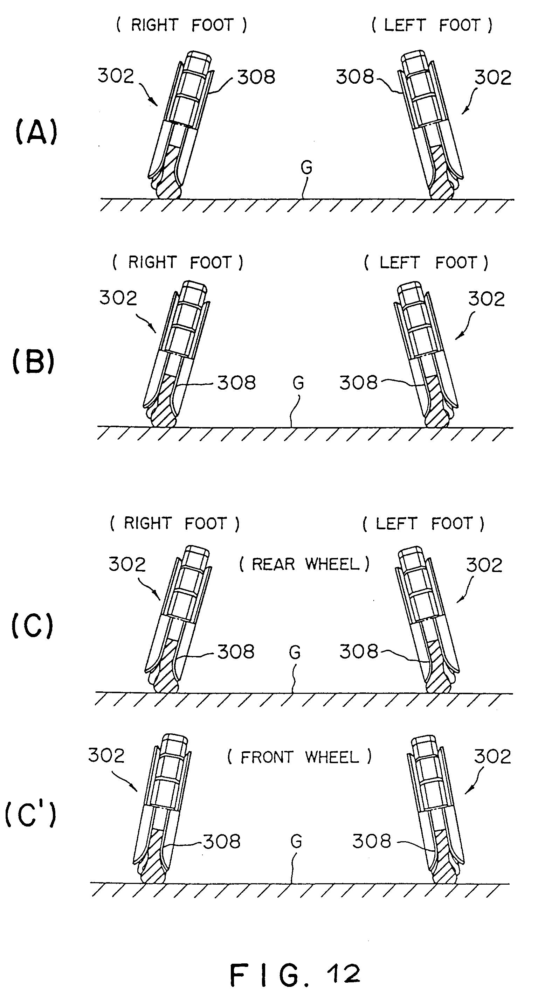

Now, the operation of the present embodiment will be described with reference to Figs. 11 and 12 for the case where skiing is done using the pair of roller skis constituted as described above.

The operation of skis using the pair of roller skis 300 of the present embodiment is effectively carried out fundamentally by utilizing the action of the elastic wheel described with reference to Fig. 9, but in fact, considerably complicated motions are added thereto, similarly to the motion of ordinary common skis. Accordingly, the turning motion according to the most fundamental "Pflugbogen" will be described here.

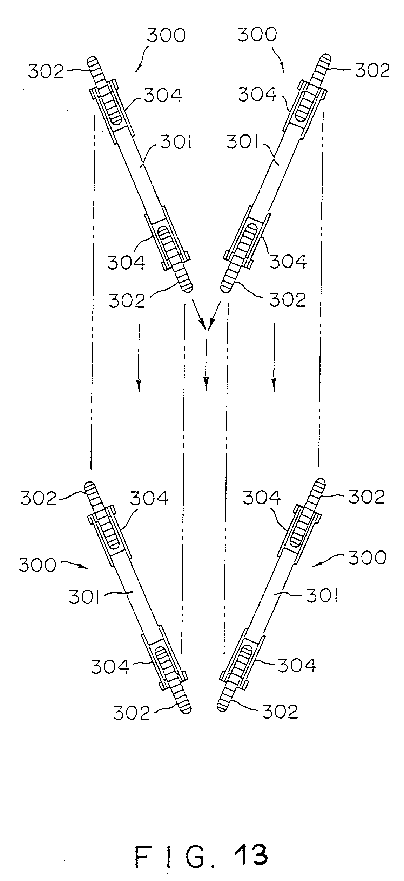

Fig. 11(A) illustrates the state where a skier keeps his roller skis in the form of an inverted-V and runs straight toward a fall line in a "Pflug" position. Fig. 12(A) illustrates the state of deformation of the elastic wheels 302. In this state, respective loads are equally applied to the left and right boots 307A and 307B of the skier and, as shown in Fig. 13, the skis 300 run in the direction of the resultant force of the respective advancing forces (the direction of the fall line).

Fig. 11(B) illustrates the state where the skier starts a turn to the left from the "Pflug" position. Further, Fig. 12(B) shows the state of deformation of the elastic wheel 302 at that time. In this state, a load applied to the boot 307B for the left foot is reduced from the straight running state so that the advancing force of the left foot (the force to advance to the right) is reduced. This causes the balance of the forces to the left and right directions to be lost so that a turn to the left is started.

The elastic wheels 302 have the same amount of deformation at the left and right as shown in Fig. 12(B), however the elastic wheel 302 at the right foot (the outside foot) is pressed more strongly against the rim 308 and subjected to a resistance from the ground to produce the action corresponding to the edging of the skis. This provides a force to further advance to the left.

On the other hand, the elastic wheel 302 at the left foot (the inside foot), which is not strongly pressed against the rim 308, is subjected to weak resistance from the ground and therefore also weak force to advance to the right.

Fig. 11(C) illustrates the state where the skier further continues the turn to the left following the start of the turn. Figs. 12(C) and 12(C') illustrate the states of deformation of the rear elastic wheel 302 and the front elastic wheel 302.

In these states, the load of the left foot is reduced similarly to the start of the turn, and accordingly, the turn to the left is continued. At this time, the skier does the turn in the form of an arc without running in a straight line to the left and front direction, which is due to the difference between the amounts of elastic deformation (amounts of sideslip) of the front and rear elastic wheels.

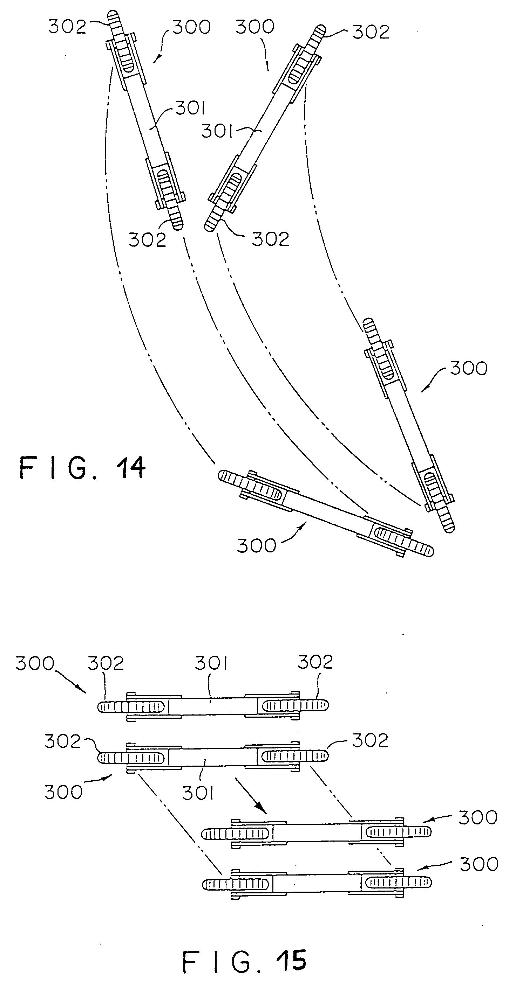

That is, as shown in Figs. 12(C) and (C'), when the skier does the turn, he applies a force to the ski, pushing out the heel of the outer foot in the direction outside the turn, so that the rear elastic wheel is undergoing greater elastic deformation and therefore greater sideslip than the front elastic wheel. Accordingly, the pair of skis 300 run in the form of a smooth turning arc, as shown in Fig. 14, and the skier can do a "Pflugbogen" with a feeling similar to that of ordinary snow skis.

As described above, the skis 300 according to the invention permit a skier to do a smooth turn by making the amount of transverse shifting of the rear wheel larger than that of the front wheel.

In view of this, the amount of transverse shifting of the front and rear wheels can be changed in the following manner when assembling the skis using the elastic wheels.

(i) The top surface of each of the elastic pieces of the front elastic wheel is formed as a curved surface and the top surface of each of the elastic pieces of the rear elastic wheel is formed as a planar surface.

With this assembly, when the elastic wheels are tilted, the elastic piece of the front elastic wheel shifts in the ground contact point, and accordingly, the amount of elastic deformation thereof becomes smaller than that of the elastic piece of the rear elastic wheel which is difficult to shift in the ground contact area. This enables the amount of transverse shifting of the front wheel to be made smaller than that of the rear wheel.

(ii) The slits of the elastic pieces of the rear wheel are made larger in depth than those of the front wheel.

With the deepened slits, the amount of elastic deformation of the elastic piece is larger and accordingly, the amount of transverse shifting of the elastic wheel is also larger.

(iii) The clearance between the rim and tire part of the rear wheel is made larger than that of the front wheel.

Since the elastic deformation of the tire part is restricted by the rim, the larger the clearance between the rim and tire is, the larger the amount of elastic deformation thereof is, and accordingly, the amount of transverse shifting of the elastic wheel.

(iv) The elastic modulus of the tire part of the rear wheel is made smaller than that of the front wheel. This is obtained, for example, by decreasing the hardness of the rubber member constituting the tire part of the rear wheel.

This provides a greater amount of elastic deformation of the rear wheel, which enables the amount of transverse shifting thereof to be made larger than that of the front wheel.

(v) The metal fittings for fixing a boot are provided on the boot-placing plate in position near the rear wheel.

This causes a pushing-out force provided by the heel of a skier to be effectively transmitted to the rear elastic wheel, which facilitates the elastic deformation (transverse shift) of the rear wheel, as compared with the front wheel.

The elastic wheels which have already been described by way of the various embodiments may suitably be selected to constitute a pair of roller skis, so that various kinds of roller skis can be obtained which are suited to skiers from beginners to professionals, sizes of slopes, kinds of games or the like.

Further, the present embodiment shows an example in which the elastic wheels are attached to the boot-placing plate at both the front and rear thereof. However, alternatively, a pair of roller skis having the features of the invention may be provided by attaching any one of the elastic wheels, for example only to the rear of the plate and an ordinary wheel to the front thereof.

Moreover, the present embodiment shows an example in which the elastic wheels are attached to the plate by means of a pair of supporting frames. However, the elastic wheels may be rotatably attached directly to the boot-placing plate by providing longitudinal slots in the boot-placing plate and disposing the elastic wheels in the slots.

Fig. 15 shows the state where a skier is obliquely sliding down a slope using the pair of roller skis according to the invention. That is, the pair of skis 300 are arranged in one direction and a load is applied to the side of the valley (not upslope), so that the elastic wheels 302 are caused to be shifted transversely, thereby permitting the roller skis to produce a sideslipping motion with a feeling similar to generally skiing on snow.

As described above, with the elastic wheel according to the invention, application of an external force to the wheel in the direction perpendicular to the running direction of the wheel causes a required elastic deformation to be continuously produced in the tire part according to the size of the external force, enabling the wheel to be sideslipped, stopped suddenly and turned at an acute angle.

Further, the roller skis according to the invention, which utilizes the features of the elastic wheel as described above, provide motions such as running, turning, stopping and the like with a feeling substantially similar to generally skiing on snow. Accordingly, use of the present invention in "Gelande" or sports facilities during an off-season without snow makes it possible to carry out real skiing matches similar to the general skis on snow.

## Claims

1. An elastic wheel comprising a tire part (101) which includes a circular base end portion (102) and a plurality of elastic pieces (104) being elastically deformable in the direction perpendicular to the running direction of the wheel, wherein the tire part (101) includes auxiliary elastically restoring means, said auxiliary elastically restoring means including a core disk (107) which is embedded in the tire part (101) and includes a plurality of disc pieces (106) arranged radially.

2. An elastic wheel as claimed in claim 1, wherein said tire part (101) consists of ring like elastic pieces (104) of a cross section having the dimension of the transverse width in the outer periphery larger than that in the inner periphery.

3. An elastic wheel as claimed in one of claims 1 to 3, wherein said tire part (101) is formed in radial directions with a plurality of slits (103).

4. An elastic wheel according to any preceding claim, wherein said tire part comprises a plurality of elastic pieces (104) independent from each other.

5. An elastic wheel according to any preceding claim, wherein clearances (105) in radial directions are provided between respective adjacent elastic pieces (104).

6. An elastic wheel according to any preceding claim, wherein each elastic piece (104) has a planar top surface.

7. An elastic wheel according to any preceding claim, wherein said plurality of disk pieces (106) are provided in the tire part (16) corresponding to the plurality of elastic pieces (104), respectively.

8. An elastic wheel according to any preceding claim, wherein the end of each of the disk pieces (106) is branched into a plurality of pieces (108).

9. An elastic wheel according to any preceding claim, wherein a receiving washer (109) is attached to the end of each of the disk pieces (106) perpendicularly thereto.

10. An elastic wheel according to any preceding claim, wherein said plurality of pieces (106) are bent oppositely to each other.

11. A pair of roller skis (300) each comprising a boot-placing plate (301) on which a boot of a skier is placed and fixed; and rotating wheels (302) rotatably attached to said boot-placing plate (301) in the front thereof and at the back thereof, at least one of said rotating wheels (302) being an elastic wheel comprising a tire part (101) which includes a circular base end portion (102) and a plurality of elastic pieces (104) being elastically deformable in the direction perpendicular to the running direction of the wheel, wherein the tire part (101) includes auxiliary elastically restoring means, said auxiliary elastically restoring means including a core disk (107) which is embedded in the tire part (101) and includes a plurality of disc pieces (106) arranged radially.

12. A pair of roller skis (300) as claimed in claim 11, wherein respective wheel supporting means are provided in the front of and at the back of said boot-placing plate (301), and the respective elastic wheels (302) are rotatably supported by said wheel supporting means.

13. A pair of roller skis (300) as claimed in claim 12, wherein said wheel supporting means each comprises wheel supporting frames (304) and a wheel supporting shaft (305) secured to one of the ends of said supporting frames (304).

14. A pair of roller skis (300) as claimed in claim 11, wherein fittings (306a, 306b) for fixing a boot are attached to each of the boot placing plates (301).

## Patentansprüche

1. Elastisches Rad mit einem Rad- bzw. Reifenteil (101), welches einen kreisförmigen Basisendabschnitt (102) und eine Vielzahl von elastischen Stücken (104) umfaßt, welche elastisch in der Richtung senkrecht zu der Lauf- bzw. Rollrichtung des Rades verformbar sind, wobei der Reifenteil (101) elastische Hilfsrückstellmittel umfaßt, wobei die elastischen Hilfsrückstellmittel eine Kern- bzw. Einlagescheibe (107) beinhalten, welche in dem Reifenteil (101) eingebettet ist und eine Vielzahl von Scheibenteilen (106) beinhaltet, welche radial angeordnet sind.

2. Elastisches Rad gemäß Anspruch 1, bei welchem der Reifenteil (101) aus ringförmigen elastischen Stücken (104) besteht mit einem Querschnitt, dessen Dimension transversaler Breite in dem äußeren Umfang größer als in dem inneren Umfang ist.

3. Elastisches Rad gemäß einem der Ansprüche 1 oder 2, bei welchem der Reifenteil (101) in radialen Richtungen mit einer Vielzahl von Schlitzen (103) ausgebildet ist.

4. Elastisches Rad gemäß einem der vorangehenden Ansprüche, bei welchem der Reifenteil eine Vielzahl von elastischen Stücken (104), welche unabhängig voneinander sind, umfaßt.

5. Elastisches Rad gemäß einem der vorangehenden Ansprüche, bei welchem Zwischenräume (105) in radialen Richtungen zwischen jeweils angrenzenden elastischen Stücken (104) vorgesehen sind.

6. Elastisches Rad gemäß einem der vorangehenden Ansprüche, bei welchem jedes elastische Stück (104) eine planare obere Fläche aufweist.

7. Elastisches Rad gemäß einem der vorangehenden Ansprüche, bei welchem die Vielzahl von Scheibenstücken (106) in dem Reifenteil (16) jeweils korrespondierend zu der Vielzahl von elastischen Stücken (104) vorgesehen ist.

8. Elastisches Rad gemäß einem der vorangehenden Ansprüche, bei welchem das Ende jedes Scheibenstückes (106) in eine Vielzahl von Stücken (108) aufgezweigt ist.

9. Elastisches Rad gemäß einem der vorangehenden Ansprüche, bei welchem eine Aufnahmeunterlegscheibe bzw. Scheibe (109) an dem Ende von jedem der Scheibenstücke (106) rechtwinklig dazu angebracht ist.

10. Elastisches Rad gemäß einem der vorangehenden Ansprüche, bei welchem die Vielzahl von Stücken (106) entgegengesetzt zueinander gebogen sind.

11. Ein Paar von Rollskiern (300), jeweils mit einer Schuhanbringungsplatte (301), an der ein Schuh bzw. Stiefel eines Skiläufers plaziert und befestigt wird, und Dreh- bzw. Laufrädern (302), welche drehbar an der Schuhanbringungsplatte (301) im vorderen Bereich von dieser und an dem hinteren Bereich von dieser angebracht sind, wobei wenigstens eines dieser Laufräder (302) ein elastisches Rad ist mit einen Rad- bzw, Reifenteil (101) umfaßt, welcher einen kreisförmigen Basisendabschnitt (102) und eine Vielzahl von elastischen Stücken (104) beinhaltet, welche in der Richtung senkrecht zu der Laufrichtung des Rades elastisch verformbar sind, wobei der Reifenteil (101) elastische Hilfsrückstellmittel beinhaltet, wobei die elastischen Hilfsrückstellmittel eine Einlagescheibe (107) beinhalten, welche in dem Reifenteil (101) eingebettet ist und eine Vielzahl von Scheibenstücken (106) beinhaltet, welche radial angeordnet sind.

12. Ein Paar von Rollskiern (300) gemäß Anspruch 11, bei welchem jeweilige Radtragmittel in dem Vorderbereich und in dem Hinterbereich der Schuhanbringungsplatte (301) vorgesehen sind und die jeweiligen elastischen Räder (302) drehbar durch die Radtragmittel getragen werden.

13. Ein Paar von Rollskiern (300) gemäß Anspruch 12, bei welchem die Radtragmittel jeweils Radtragrahmen (304) und eine Radtragwelle bzw. - achse (305), welche an einem der Enden des Tragrahmens (304) befestigt ist, umfaßt.

14. Ein Paar von Rollskiern (300) gemäß Anspruch 11, bei welchem Passungen bzw. Verbundstücke (306a, 306b) zum Befestigen eines Schuhs an jeder der Schuhanbringungsplatten (301) angebracht sind.

## Revendications

1. Roue élastique comportant un élément formant bandage (101) qui comprend une partie extrême circulaire de base (102) et plusieurs pièces élastiques (104) pouvant être déformées élastiquement dans la direction perpendiculaire à la direction de roulement de la roue, l'élément formant bandage (101) comprenant un moyen de rappel élastique auxiliaire, ledit moyen de rappel élastique auxiliaire comprenant un disque formant âme (107) qui est encastré dans l'élément formant bandage (101) et qui comprend plusieurs pièces (106) de disque agencées radialement.

2. Roue élastique selon la revendication 1, dans laquelle ledit élément formant bandage (101) est constitué de pièces élastiques (104) analogues à un anneau de section transversale ayant la dimension de la largeur transversale, dans la périphérie extérieure, plus grande que celle présente dans la périphérie intérieure.

3. Roue élastique selon l'une des revendications 1 à 3, dans laquelle ledit élément formant bandage (101) est formé de façon à présenter plusieurs fentes (103) dans des directions radiales.

4. Roue élastique selon l'une quelconque des revendications précédentes, dans laquelle ledit élément formant bandage comporte plusieurs pièces élastiques (104) indépendantes les unes des autres.

5. Roue élastique selon l'une quelconque des revendications précédentes, dans laquelle des espaces (105) sont prévus dans des directions radiales entre des pièces élastiques adjacentes respectives (104) .

6. Roue élastique selon l'une quelconque des revendications précédentes, dans laquelle chaque pièce élastique (104) présente une surface supérieure plane.

7. Roue élastique selon l'une quelconque des revendications précédentes, dans laquelle lesdites plusieurs pièces (106) de disque sont prévues dans l'élément formant bandage (16) de façon à correspondre aux plusieurs pièces élastiques (104), respectivement.

8. Roue élastique selon l'une quelconque des revendications précédentes, dans laquelle l'extrémité de chacune des pièces (106) de disque est ramifiée en plusieurs pièces (108).

9. Roue élastique selon l'une quelconque des revendications précédentes, dans laquelle une rondelle (109) de réception est fixée à l'extrémité de chacune des pièces de disque (106) perpendiculairement à elle.

10. Roue élastique selon l'une quelconque des revendications précédentes, dans laquelle lesdites plusieurs pièces (106) sont pliées d'une manière opposée entre elles.

11. Paire de skis (300) à roulettes comportant chacun une plaque (301) de mise en place d'une chaussure sur laquelle une chaussure d'un skieur est placée et fixée ; et des roues tournantes (302) montées de façon à pouvoir tourner sur ladite plaque (301) de mise en place de chaussure à l'avant de celle-ci et à l'arrière de celle-ci, au moins l'une desdites roues tournantes (302) étant une roue élastique comportant un élément formant bandage (101) qui comprend une partie extrême circulaire de base (102) et plusieurs pièces élastiques (104) pouvant être déformées élastiquement dans la direction perpendiculaire à la direction de roulement de la roue, l'élément formant bandage (101) comprenant un moyen de rappel élastique auxiliaire, ledit moyen de rappel élastique auxiliaire comprenant un disque formant âme (107) qui est encastré dans l'élément formant bandage (101) et qui comprend plusieurs pièces (106) de disque agencées radialement.

12. Paire de skis (300) à roulettes selon la revendication 11, dans laquelle des moyens respectifs de support de roue sont prévus à l'avant et à l'arrière de ladite plaque (301) de mise en place d'une chaussure, et les roues élastiques respectives (302) sont supportées de façon à pouvoir tourner par lesdits moyens de support de roue.

13. Paire de skis (300) à roulettes selon la revendication 12, dans laquelle lesdits moyens de support de roue comprennent chacun des bâtis (304) de support de roue et un axe (305) de support de roue fixé à l'une des extrémités desdits bâtis (304) de support.

14. Paire de skis (300) à roulettes selon la revendication 11, dans laquelle des accessoires (306a, 306b) pour la fixation d'une chaussure sont montés sur chacune des plaques (301) de mise en place d'une chaussure.
